# EUROPEAN PATENT APPLICATION

(11) **EP 2 306 704 A2**
(43) Date of publication of application: **06.04.2011**
(21) Application number: 10173755.9
(22) Date of filing: 23.08.2010
(51) Int. Cl.: H04N 5/14, G06T 5/00

(54) **Display apparatus for improving transient of image and image processing method for the same**

(30) Priority: 26.08.2009 KR 20090079312
(71) Applicant: Samsung Electronics Co., Ltd., Suwon-si, Gyeonggi-do 442-742 (KR)
(72) Inventor: JUNG, Youn-sook, Suwon-si Gyeonggi-do (KR); LEE, Ki-deok, Seoul (KR); PARK, Bo-gun, Suwon-si Gyeonggi-do (KR)
(74) Representative: Fearnside, Andrew Simon

(57) **Abstract**

A display apparatus and an image processing method are provided. The display apparatus processes an input image to improve a transient, and adjusts a gain of a luminance of a pixel of which a slope variation of a luminance exceeds a threshold value, the pixel being among pixels of the image having the improved transient.

## Description

### CROSS-REFERENCE TO RELATED APPLICATIONS

This application claims priority from Korean Patent Application No. 10-2009-0079312, filed on August 26, 2009, in the Korean Intellectual Property Office, the disclosure of which is herein incorporated by reference in its entirety.

### BACKGROUND

### 1. Field

Apparatuses consistent with the exemplary embodiments relate to a display apparatus and an image processing method, and more particularly, to a display apparatus which improves a transient of an image and an image processing method.

### 2. Description of the Related Art

With the development of display technology, digital techniques have been used to improve an image quality if a transient of an image content is lower than the resolution supported by a display apparatus. Specifically, a technique which enhances a contrast of edge components of an input image has been used in order to improve the transient and overall image quality.

To improve a transient of a particular part of an image, a gain of a luminance of the image should be increased. However, if the gain of the luminance of an image is increased excessively, the gain is adjusted so that a part which is beyond the digitally displayable range maintains a maximum luminance.

Accordingly, when a transient of an input image is improved, part of an image in a peak region becomes flat. That is, the peak region of the image is displayed to be a flat image, not a peak image, and thus the part which is supposed to be displayed as a sharp image is not displayed properly.

A user

### SUMMARY

Exemplary embodiments address the above-described disadvantages and other disadvantages not described above. Also, the exemplary embodiments are not required to overcome the disadvantages described above, and an exemplary embodiment may not overcome any of the disadvantages described above.

Exemplary embodiments provide a display apparatus which processes an input image to improve a transient of the image, and adjusts a gain of luminance of a pixel for which a slope variation of a luminance exceeds a threshold value, the pixel being among pixels of the image having the improved transient, and an image processing method regarding the same.

According to an exemplary aspect, there is provided a display apparatus, including an image processing unit which processes an input image to improve a transient, and adjusts a gain of a luminance of a pixel for which a slope variation of a luminance exceeds a threshold value, the pixel being among pixels of the image having the improved transient; and a display which displays the image processed by the image processing unit.

The image processing unit may adjust the gain to compensate for a luminance of a peak region which has become flat after the transient is improved.

the pixel for which the slope variation of the luminance exceeds the threshold value; and a gain adjustment unit which adjusts the gain of the luminance of the pixel detected by the detection unit.

The transient improvement unit may process an input image to improve a transient by adjusting a gain of a luminance of an edge area of the image to increase a luminance slope.

The detection unit may detect the pixel by detecting a specific pixel in which an absolute value of a difference between a luminance of the specific pixel and a luminance of a first adjacent pixel is greater than a first threshold value, and an absolute value of a difference between the luminance of the specific pixel and a luminance of a second adjacent pixel that is on the other side of the specific pixel from the first adjacent pixel is less than a second threshold value.

The first adjacent pixel and the second adjacent pixel may be disposed adjacent to the specific pixel in a horizontal direction or in a vertical direction.

The gain adjustment unit may reduce a rate of a luminance increase by decreasing a gain of the detected specific pixel if a luminance of the first adjacent pixel is less than a luminance of the second adjacent pixel.

The gain adjustment unit may reduce a rate of luminance decrease by decreasing a gain of the detected specific pixel if the luminance of the first adjacent pixel is greater than the luminance of the second adjacent pixel.

The first threshold value may be greater than the second threshold value.

The first threshold value may be a minimum value regarding a degree of a steep variation of the luminance, and the second threshold value may be a maximum value regarding a degree of a gentle variation of the luminance.

According to another exemplary aspect, there is provided an image processing method, including processing an input image to improve a transient, and adjusting a gain of a luminance of a pixel for which a slope variation of the luminance exceeds a threshold value, the pixel being among pixels of the image having the improved transient; and displaying the image processed by the image processing unit.

The processing of the input image to improve the transient may include adjusting a gain to compensate for a luminance of a peak region which has become flat after the transient is improved.

the input image to improve the transient may include processing an input image to improve a transient; detecting a pixel for which the slope variation of the luminance exceeds the threshold value; and adjusting the gain of the luminance of the pixel detected by the detection unit.

The processing the input image to improve the transient may include adjusting a gain of a luminance of an edge area of the image to increase a luminance slope.

The detecting the pixel may include detecting a specific pixel in which an absolute value of a difference between a luminance of the specific pixel and a luminance of a first adjacent pixel is greater than a first threshold value, and an absolute value of a difference between the luminance of the specific pixel and a luminance of a second adjacent pixel that is on the other side of the specific pixel from the first adjacent pixel is less than a second threshold value.

The first adjacent pixel and the second adjacent pixel may be disposed adjacent to the specific pixel in a horizontal direction or in a vertical direction.

The adjusting the gain may include reducing a rate of luminance increase by decreasing a gain of the detected specific pixel if the luminance of the first adjacent pixel is less than the luminance of the second adjacent pixel.

The adjusting the gain may include reducing a rate of luminance decrease by decreasing a gain of the detected specific pixel if the luminance of the first adjacent pixel is greater than the luminance of the second adjacent pixel.

The first threshold value may be greater than the second threshold value.

The first threshold value may be a minimum value regarding a degree of a steep variation of the luminance, and the second threshold value may be a maximum value regarding a degree of a gentle variation of the luminance.

### BRIEF DESCRIPTION OF THE DRAWINGS

The above and/or other aspects will be more apparent by describing certain exemplary embodiments with reference to the accompanying drawings, in which:

FIG. 1 is a block diagram illustrating a display apparatus according to an exemplary embodiment;

FIG. 2 is a block diagram illustrating an image processing unit according to an exemplary embodiment;

FIG. 3 is a flowchart provided to explain an image processing method to improve a transient of an image, according to an exemplary embodiment;

FIGS. 4A to 4C are graphs showing luminance per pixel while an input image is processed, according to an exemplary embodiment; and

FIGS. 5A to 5C are graphs showing luminance per pixel while an input image having a peak region is processed, according to an exemplary embodiment.

### DETAILED DESCRIPTION

Certain exemplary embodiments will now be described in greater detail with reference to the accompanying drawings.

In the following description, the same drawing reference numerals are used for the same elements even in different drawings. The matters defined in the description, such as detailed construction and elements, are provided to assist in a comprehensive understanding of the invention. Thus, it is apparent that the present invention can be carried out without those specifically defined matters. Also, well-known functions or constructions are not described in detail since they would obscure the invention with unnecessary detail.

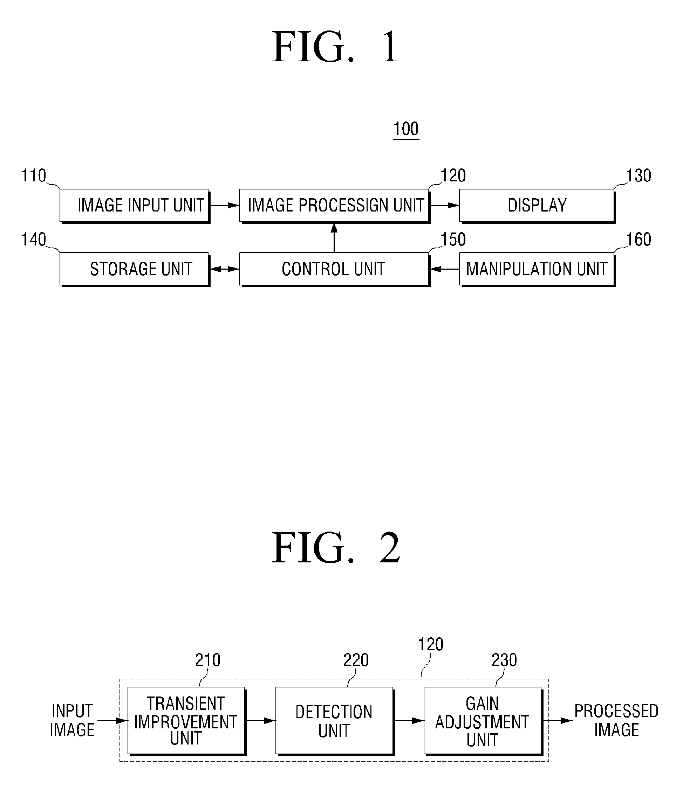

FIG. 1 is a block diagram illustrating a display apparatus 100 according to an exemplary embodiment. The display apparatus 100 processes an input image to improve a transient of the image, and adjusts a gain of a luminance of a pixel for which a slope variation of the luminance exceeds a threshold value, among pixels of the image having an improved transient.

Referring to FIG. 1, the display apparatus 100 comprises an image input unit 110, an image processing unit 120, a display 130, a storage unit 140, a control unit 150, and a manipulation unit 160.

The image input unit 110 receives image data. The image input unit 110 may receive various types of image data. For example, the image input unit 110 may receive image data from a storage medium which stores an image compressed in a Motion Picture Expert Group-2 (MPEG-2) format, or receive image data through a digital broadcasting signal compressed in an MPEG-2 format. The image input unit 110 may transfer the input image data to the image processing unit 120.

The image processing unit 120 performs signal processing on the image data received from the image input unit 110 such as data decompressing, transient compensating, and so on. In particular, the image processing unit 120 decodes the image which has been compressed in an MPEG-2 format, and thus outputs the decompressed image data.

The image processing unit 120 processes an input image to improve a transient of the image. The image processing unit 120 adjusts a gain of a luminance of a pixel for which a slope variation of the luminance exceeds a threshold value, among pixels of the image having the improved transient. This is to compensate a peak region of the image that has become flat after the transient of the image is improved. The detailed description of the image processing unit 120 will be explained later in detail with reference to FIG. 2.

The image processing unit 120 transfers to the display 130 an image which is decompressed and of which a transient is improved. The display 130 outputs the processed image on a screen.

The control unit 150 controls overall operations of the display apparatus 100. Specifically, the control unit 150 controls the image processing unit 120 so that the image received from the image input unit 110 is decompressed, a transient of the image is improved, and a gain of the luminance is adjusted for a pixel of which a slope variation of a luminance exceeds a threshold value, among pixels of the image having the improved transient.

The storage unit 140 stores information used to compensate a transient of an image received from the image input unit 110, and programs to execute overall operations of the display apparatus 100. The storage unit 140 may be implemented using a hard disc drive, a non-volatile memory, and so on.

The manipulation unit 160 transmits to the control unit 150 a command which is input, for example, by a user using a remote controller (not shown) or manipulation buttons (not shown), or a touchscreen provided on the display apparatus 100.

The display apparatus 100 adjusts a gain of a luminance of a pixel for which a slope variation of the luminance exceeds a threshold value, among pixels of the image having an improved transient. By doing so, the display apparatus 100 may compensate for a peak region which has been distorted to be flat after the transient of the image is improved.

Hereinbelow, the detailed structure of the image processing unit 120 will be described with reference to FIG. 2. FIG. 2 is a block diagram illustrating the image processing unit 120 according to an exemplary embodiment.

Referring to FIG. 2, the image processing unit 120 comprises a transient improvement unit 210, a detection unit 220, and a gain adjustment unit 230.

The transient improvement unit 210 processes an image to improve a transient of the image. To improve a transient of an image, the exemplary embodiment may employ a luminance transient improvement (LTI) which improves a transient of an image by increasing a slope of an edge region of the image using linear or nonlinear filtering. Herein, the slope represents a slope on a graph showing luminance per pixel. Accordingly, increasing slope denotes that the luminance is sharply changed, and decreasing slope denotes that the luminance is gently changed. As used herein, "sharply" denotes a change of slope that is greater than or equal to 45 degrees, and "gently" denotes a change of slope that is less than 45 degrees.

The edge region of an image denotes edge parts of specific objects included in the image. That is, if a slope of an edge part of an object is increased, the luminance of the edge part is sharply changed. Accordingly, the transient of an image may be improved since a boundary of an object is clearly marked.

To increase a luminance slope, the transient improvement unit 210 performs at least one of linear filtering and nonlinear filtering on a pixel of an input image in both a vertical direction and a horizontal direction. The transient improvement unit 210 increases a slope of an edge region of an image by combining the result of vertical filtering with the result of horizontal filtering. Accordingly, the transient improvement unit 210 generates a final image on which a transient of edge regions of an original image is improved in a horizontal direction and a vertical direction.

The transient improvement unit 210 adjusts a gain of of a luminance of an edge region of an image based on the combination of results of linear filtering and non-linear filtering to increase a luminance slope of the edge region, so as to improve a transient of the image.

The transient improvement unit 210 improves a transient of an image using the above process. However, a peak region in an image may become flat in the process of improving the transient.

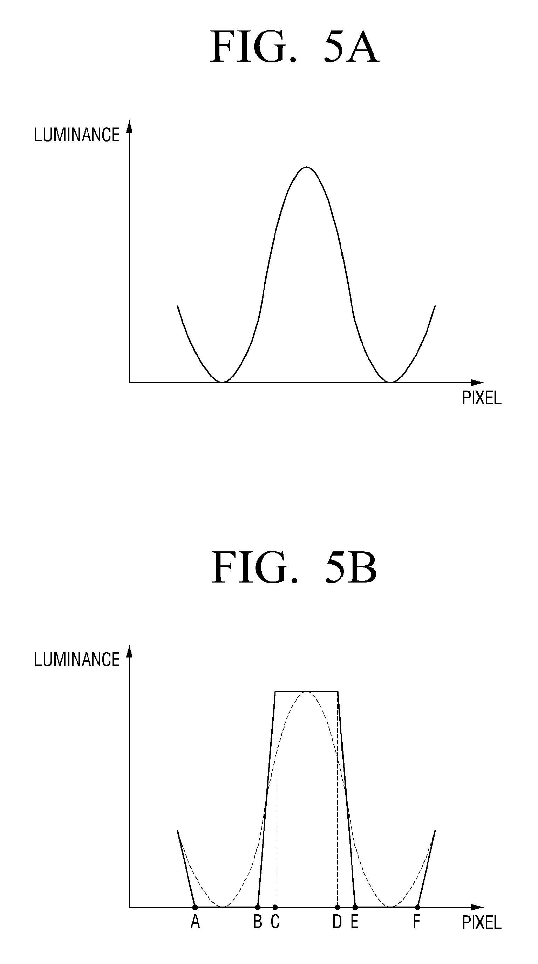

Herein, the peak region denotes a pixel having a maximum point or a minimum point on a graph showing luminance per pixel (see FIGS. 5A to 5C). That a peak region becomes flat denotes that the peak region has the same luminance. The peak region is represented as a sharp object on an image. However, if the peak region becomes flat, the object which should be shown sharply is shown blurry, which makes the image look unnatural (see FIG. 5B). For example, if an image including a hedgehog is input, and a peak region becomes flat in the process of improving a transient, sharp spikes of the hedgehog are shown blurry.

Accordingly, to prevent the peak region of an image from becoming flat, the image processing unit 120 re-adjusts a gain of a luminance of a specific pixel of an image of which a transient has been improved using the detection unit 220 and the gain adjustment unit 230.

from an image having an improved transient, the specific pixel being a pixel for which a slope variation of a luminance of the specific pixel exceeds a threshold value. Herein, the threshold value denotes a degree of the slope variation of the luminance. Whether the slope variation of luminance exceeds the threshold value is determined according to a first threshold value, a second threshold value, and a difference between a luminance of a specific pixel and a luminance of adjacent pixels.

Specifically, the detection unit 220 detects a specific pixel in which an absolute value of a difference between a luminance of the specific pixel and a luminance of a first adjacent pixel exceeds the first threshold value, and an absolute value of a difference between the luminance of the specific pixel and a luminance of a second adjacent pixel on the other side of the specific pixel from the first adjacent pixel is less than the second threshold value. That is, the case that the slope variation of the luminance of the specific pixel exceeds a threshold value corresponds to the case in which an absolute value of a difference between a luminance of the specific pixel and a luminance of a first adjacent pixel exceeds the first threshold value, and an absolute value of a difference between the luminance of the specific pixel and a luminance of a second adjacent pixel on the other side of the specific pixel from the first adjacent pixel is less than the second threshold value.

Herein, the first adjacent pixel denotes an adjacent pixel having a steep luminance slope with respect to the adjacent pixel. That is, difference in the luminance is large between the first adjacent pixel and the specific pixel. For example, if the luminance of the first adjacent pixel is more than twice the luminance of the specific pixel, the difference in the luminance is large. On the other hand, the second adjacent pixel denotes an adjacent pixel having a gentle luminance slope with respect to the specific pixel. That is, difference in luminance is small between the first adjacent pixel and the specific pixel. For example, if the luminance of the first adjacent pixel is less than half the luminance of the specific pixel, the difference in the luminance is small.

The first and second adjacent pixels may be pixels adjacent to the specific pixel in a horizontal direction or a vertical direction. Specifically, with regard to the horizontal direction of the specific pixel, the first adjacent pixel is on the left of the specific pixel, and the second adjacent pixel is on the right of the specific pixel. Alternatively, with regard to the horizontal direction of the specific pixel, the first adjacent pixel may be on the right of the specific pixel, and the second adjacent pixel may be on the left of the specific pixel. With regard to the vertical direction of the specific pixel, the first adjacent pixel is above the specific pixel, and the second adjacent pixel is below the specific pixel. Alternatively, with regard to the vertical direction of the specific pixel, the first adjacent pixel may be below the specific pixel, and the second adjacent pixel may be above the specific pixel.

The first and second threshold values are used to calculate whether a luminance slope is significantly varied on a specific pixel based on a difference between the luminance of the specific pixel and the luminance of adjacent pixels. That is, the luminance difference between the specific pixel and the adjacent pixel is large, e.g., two times, as compared to the luminance difference between the specific pixel and another adjacent pixel. In more detail, the first and second threshold valules are used to detect a peak region which has become flat. Specifically, the first threshold value is a minimum value regarding a degree of the steep variation of luminance, and the second threshold value is a maximum value regarding a degree of the gentle variation of luminance. Accordingly, the first threshold value is greater than the second threshold value.

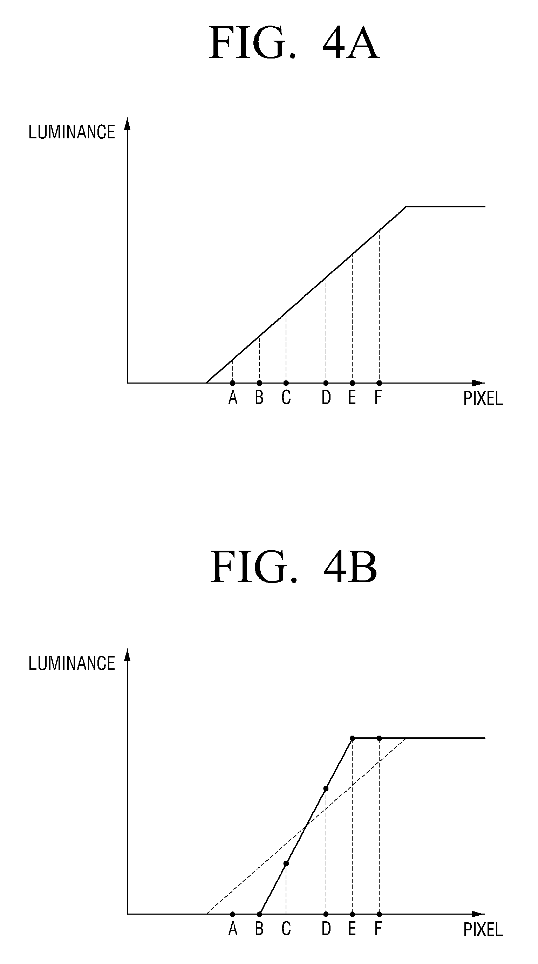

An exemplary embodiment is explained with reference to the graph illustrated in FIG. 4B. Pixels D and F are adjacent to pixel E. Since the luminance of pixel D is significantly different from luminance of pixel E, pixel D is determined as a first adjacent pixel to pixel E. Since the luminance of pixel F is only slightly different from luminance of pixel E, pixel F is determined as a second adjacent pixel to pixel E. In addition, if it is supposed that a difference between the luminance of pixel D and the luminance of pixel E exceeds a first threshold value, and a difference between the luminance of pixel E and the luminance of pixel F is less than a second threshold value, pixel E becomes a specific pixel which the detection unit 220 targets. Accordingly, in this situation, the detection unit 220 detects pixel E as a specific pixel.

The detection unit 220 detects a specific pixel having a steep luminance slope with respect to the first adjacent pixel and having a gentle luminance slope with respect to the second adjacent pixel. This is because the specific pixel may be an initial pixel or a final pixel on a peak region.

The gain adjustment unit 230 decreases a gain of the detected specific pixel if the luminance of the first adjacent pixel is less than the luminance of the second adjacent pixel. The gain denotes a difference between a luminance of a pixel of an original image and a luminance of a pixel of an image processed by the transient improvement unit 210. Accordingly, if the gain is decreased, the luminance of the specific pixel is decreased. Since, if a gain is decreased, a rate of luminance increase of a specific pixel passing through the transient improvement unit 210 is reduced, if a gain is decreased, luminance of a specific pixel is decreased.

a luminance of the first adjacent pixel is less than a luminance of the second adjacent pixel, a specific pixel may be an initial pixel or a final pixel of a peak region having a maximum luminance. Accordingly, the gain adjustment unit 230 prevents a peak region from becoming flat by decreasing the gain of the specific pixel.

The gain adjustment unit 230 decreases a gain of a detected specific pixel if the luminance of the first pixel is greater than the luminance of the second pixel. The gain denotes a difference between a luminance of an original pixel and a luminance of a pixel processed by the transient improvement unit 210. Accordingly, if the gain is decreased, luminance of a corresponding pixel may be increased. Since, if a gain is decreased, a rate of luminance decrease on a specific pixel passing through the transient improvement unit 210 is reduced, if a gain is decreased, luminance of a corresponding pixel may be increased.

a minimum luminance. Accordingly, the gain adjustment unit 230 prevents a peak region from becoming flat by decreasing the gain of the specific pixel.

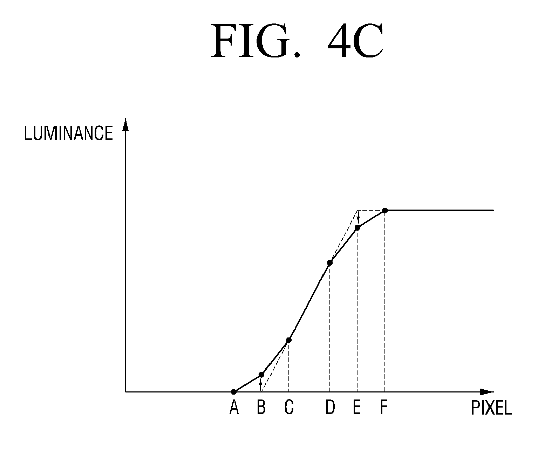

An exemplary embodiment is explained with reference to FIG. 4C. In FIG. 4C, pixel E has the first adjacent pixel D and the second adjacent pixel F (referring to the description of the detection unit 220 above). Accordingly, the luminance of pixel E is decreased, that is, the rate of luminance increase is reduced due to the reduction of a gain, since luminance of the first adjacent pixel D is less than luminance of the second adjacent pixel F. As described above, a gain of luminance of pixel E is decreased, whereby the luminance is decreased. By doing so, luminance of pixel E becomes different from luminance of pixel F and thus a region having a flat luminance slope disappears.

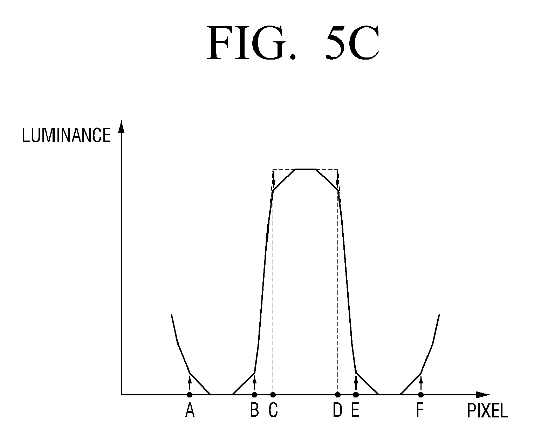

The gain adjustment unit 230 may output an image, on which a transient is improved and a peak region which has become flat is compensated (referring to FIGS. 4C and 5C). Through the above process, the image processing unit 120 may prevent a peak region from becoming flat in the process of improving a transient.

The display apparatus 100 which prevents a peak region from becoming flat in the process of improving a transient has been described.

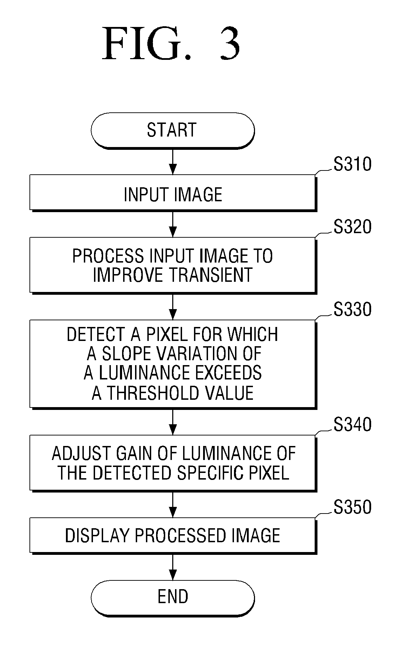

Hereinbelow, an image processing method will be explained in detail with reference to FIG. 3. In the image processing method, the display apparatus 100 processes an input image to improve a transient, and adjusts a gain of a luminance of a pixel from among pixels of an image that have an improved transient, the gain-adjusted pixel being a pixel for which a slope variation of the luminance exceeds a threshold value.

FIG. 3 is a flowchart provided to explain an image processing method to improve a transient of an image, according to an exemplary embodiment.

The display apparatus 100 receives an input image (S310). The display apparatus 100 may receive various types of image data. For example, the display apparatus 100 may receive image data from a storage medium which stores an image compressed in a Motion Picture Expert Group-2 (MPEG-2) format, or receive image data through a digital broadcasting signal compressed in an MPEG-2 format.

The display apparatus 100 processes the input image to improve a transient of the image (S320). Specifically, the display apparatus 100 adjusts a gain of a luminance on an edge region of the input image to increase a luminance slope of the edge region so that the transient of the input image is improved.

The display apparatus 100 detects a pixel from the image having the improved transient, the detected pixel being a pixel for which a slope variation of a luminance exceeds a threshold value (S330). Specifically, the display apparatus 100 detects a specific pixel in which an absolute value of a difference between a luminance of the specific pixel and a luminance of a first adjacent pixel exceeds a first threshold value, and an absolute value of a difference between the luminance of the specific pixel and a luminance of a second adjacent pixel on the other side of the speicifc pixel from the first adjacent pixel is less than a second threshold value. That is, if the slope variation of the luminance of the specific pixel exceeds a threshold value, an absolute value of a difference between the luminance of the specific pixel and the luminance of a first adjacent pixel is greater than the first threshold value, and an absolute value of a difference between the luminance of the specific pixel and the luminance of the second adjacent pixel on the other side of the specific pixel from the first adjacent pixel is less than the second threshold value.

In other words, the display apparatus 100 detects a specific pixel, for which a luminance slope between the specific pixel and the first adjacent pixel is varied greatly, i.e., sharply, and a luminance slope between the specific pixel and the second adjacent pixel is varied slightly, i.e., gently. This is because the specific pixel becomes an initial pixel or a final pixel of a peak region.

The display apparatus 100 adjusts a gain of a luminance of the detected specific pixel (S340).

Specifically, the display apparatus may decrease a gain of the detected specific pixel if the luminance of the first adjacent pixel is less than the luminance of the second adjacent pixel. The gain denotes a difference between a luminance of a pixel of an original image and a luminance of a pixel of an image processed by the transient improvement unit 210. Accordingly, in this situation, if the gain is decreased, luminance of the specific pixel may be decreased. Since, if a gain is decreased, a rate of luminance increase on a specific pixel processed by the transient improvement unit 210 is reduced, if a gain is decreased, luminance of a corresponding pixel is decreased.

the luminance of the first adjacent pixel is less than the luminance of the second adjacent pixel, the specific pixel may be an initial pixel or a final pixel of a peak region having a maximum luminance. Accordingly, the display apparatus 100 prevents a peak region from becoming flat by decreasing a gain of the specific pixel.

The display apparatus 100 may decrease a gain of the specific pixel even if the luminance of the first adjacent pixel is greater than the luminance of the second adjacent pixel. The gain denotes a difference between a luminance of a pixel of an original image and a luminance of a pixel of an image processed by the transient improvement unit 210. Accordingly, in this situation, if a gain is decreased, the luminance of a corresponding pixel is increased. Since, if a gain is decreased, a rate of luminance decrease of a pixel passing through the transient improvement unit 210 is reduced, if a gain is decreased, luminance of a corresponding pixel is increased.

If the luminance of the first adjacent pixel is greater than the luminance of the second adjacent pixel, the specific pixel may be an initial pixel or a final pixel of a peak region having a minimum luminance. Accordingly, the display apparatus 100 prevents a peak region from becoming flat by decreasing a gain of the specific pixel.

The display apparatus 100 displays the processed image (S350).

As described above, the display apparatus 100 displays an image for which not only the transient is improved but also for which a peak region which has become flat is compensated (referring to FIGS. 4C and 5C). Through the above process, the display apparatus 100 prevents a peak region from becoming flat in the process of improving a transient.

Hereinbelow, an image processing method to prevent a peak region from becoming flat will be explained with reference to graphs showing luminance per pixel illustrated in FIGS. 4A to 4C. FIGS. 4A to 4C are graphs showing luminance per pixel while an input image is processed, according to an exemplary embodiment. In FIGS. 4A to 4C, pixels A to F are horizontally disposed from left to right.

FIG. 4A is a graph showing luminance per pixel of an edge region of an input image according to an exemplary embodiment. Referring to FIG. 4A, a luminance of the input image increases from pixel A to pixel F. Since the edge region is a boundary of an object, the luminance is greatly varied. Accordingly, the luminance is usually increased or decreased sharply at an edge region.

After a transient is improved of the input image shown in FIG. 4A, a slope on a graph showing luminance per pixel is increased as shown in FIG. 4B. As a luminance of an edge region is significantly varied, a transient of an image is improved.

However, if a luminance slope is increased, the luminance of pixels A and B and pixels E and F, which are different from each other in FIG. 4A becomes the same. That is, if pixels having different luminance are changed to have the same luminance, a peak region may become flat.

In FIG. 4B, pixels A and C are adjacent to pixel B. Pixel C is a first adjacent pixel since the luminance of pixel C is significantly different from the luminance of pixel B. Pixel A is a second adjacent pixel since the luminance of pixel A is slightly different from the luminance of pixel B. In addition, if it is supposed that a difference between the luminance of pixel C and the luminance of pixel B exceeds a first threshold value, and a difference between the luminance of pixel B and the luminance of pixel A is less than a second threshold value, pixel B becomes a specific pixel which the detection unit 220 targets. In this situation, the detection unit 220 detects pixel B as a specific pixel. Also, a gain of a luminance of pixel B becomes a target to be adjusted. That is, pixels B and E are pixels for which a luminance is significantly varied from a luminance of adjacent pixels.

Accordingly, if the detection unit 220 and the gain adjustment unit 230 process the image in FIG. 4B, an image signal is produced as shown in FIG. 4C. Referring to FIG. 4C, since a gain of the luminance of pixel B is decreased and thus a rate of a luminance decrease is reduced, the luminance of pixel B is increased. In addition, since a gain of luminance of pixel E is decreased and thus a rate of a luminance increase is reduced, the luminance of pixel E is decreased.

Specifically, In FIG. 4C, pixel B has the first adjacent pixel C and the second adjacent pixel A. Accordingly, since the luminance of the first adjacent pixel C is greater than the luminance of the second adjacent pixel A, the luminance of pixel B is increased, that is, a gain of luminance is decreased and thus a rate of luminance decrease is reduced. Also, the decreasing of the gain of the luminance of pixel B causes the luminance to be increased, and thus the luminance of pixel A becomes different from the luminance of pixel B. Accordingly, a region having a flat luminance slope disappears.

Pixel E has the first adjacent pixel D and the second adjacent pixel F. Accordingly, since the luminance of the first adjacent pixel D is less than the luminance of the second adjacent pixel F, the luminance of pixel E is decreased, that is, a gain of the luminance is decreased and thus a rate of luminance increase is reduced. Also, the decreasing of the gain of the luminance of pixel E causes the luminance to be decreased, and thus the luminance of pixel E becomes different from the luminance of pixel F. Accordingly, a region having a flat luminance slope disappears.

Through the above image processing method, the display apparatus 100 prevents a peak region from becoming flat.

Hereinbelow, an image processing method to prevent a peak region from becoming flat will be explained in detail with reference to FIGS. 5A to 5C. FIGS. 5A to 5C are graphs showing luminance per pixel while an input image having a peak region is processed, according to an exemplary embodiment.

FIG. 5A is a graph showing luminance per pixel on an input image. Referring to FIG. 5A, the input image includes three peak regions. Specifically, the input image includes two peak regions on a minimum point and a peak region on a maximum point.

If a transient is improved on the input image of FIG. 5A, luminance of the image is varied as shown in FIG. 5B. Referring to FIG. 5B, as a luminance slope of the image becomes steep, a transient of the image is improved. However, a region between pixels A and B, a region between pixels C and D, and a region between pixels E and F are originally peak regions, but each of the peak regions becomes flat since the pixels in each region have the same luminance. Accordingly, the peak regions of the input image are abnormally displayed.

After the image detection unit 220 and the gain adjustment unit 230 process the image having peak regions which have become flat as shown in FIG. 5B, an image of FIG. 5C is output. As shown in FIG. 5C, the luminance of pixels A, B, E, and F is increased since a gain of the luminance is decreased and thus a rate of luminance decrease is reduced, and the luminance of pixels C and D is decreased since a gain of the luminance is decreased and thus a rate of luminance increase is reduced. By doing so, the peak regions of the image become less flat.

As described above, according to exemplary embodiments, the display apparatus 100 adjusts a gain of a luminance of pixels included in a peak region and thus prevents the peak region from becoming flat.

According to various exemplary embodiments, a display apparatus which processes an input image so that a transient of the image is improved, and adjusts a gain of a luminance of a pixel among pixels of the image having the improved transient, the gain-adjusted pixel being a pixel which has a luminance that exceeds a threshold value, and an image processing method are provided. The display apparatus may normally display a peak region of an input image even if a transient of the input image is improved. Accordingly, the display apparatus may prevent a peak region from becoming flat although the function of improving a transient of an image is used.

The foregoing exemplary embodiments are merely exemplary and are not to be construed as limiting the present invention. The present inventive concept can be readily applied to other types of apparatuses. Also, the description of the exemplary embodiments is intended to be illustrative, and not to limit the scope of the claims, and many alternatives, modifications, and variations will be apparent to those skilled in the art, each of these alternatives, modifications, and variations being included within the scope of the appended claims.

## Claims

1. A display apparatus (100) comprising:
an image processing unit (120) which is arranged to process an input image to improve a transient, and to adjust a gain of a luminance of a pixel of which a slope variation of the luminance exceeds a critical value, among pixels of the image having the improved transient; and
a display (130) which is arranged to display the image processed by the image processing unit.

2. The display apparatus as claimed in claim 1, wherein the image processing unit is arranged to adjust the gain of the luminance of the pixel of which the slope variation of the luminance exceeds a critical value, among pixels of the image having the improved transient to compensate a peak region which has become flat while the transient is improved.

3. The display apparatus as claimed in any preceding claim, wherein the image processing unit comprises:
a transient improvement unit (210) which is arranged to process the input image to improve the transient;
a detection unit (220) which is arranged to detect the pixel of which the slope variation of the luminance exceeds the critical value from the image having the improved transient; and
a gain adjustment unit (230) which is arranged to adjust the gain of the luminance of the pixel detected by the detection unit.

4. The display apparatus as claimed in claim 3, wherein the transient improvement unit is arranged to process the input image to improve the transient by adjusting a gain of the luminance at an edge area of the image to increase a luminance slope.

5. The display apparatus as claimed in claim 3, wherein the detection unit is arranged to detect a specific pixel of which a slope variation of a luminance exceeds a critical value from the image having the improved transient, by detecting the specific pixel in which an absolute value of a difference between a luminance of the specific pixel and a luminance of a first adjacent pixel is greater than a first critical value, and an absolute value of a difference between the luminance of the specific pixel and a luminance of a second adjacent pixel opposite the first adjacent pixel is less than a second critical value.

6. The display apparatus as claimed in claim 5, wherein the first adjacent pixel and the second adjacent pixel are disposed adjacent to the specific pixel in a horizontal direction or in a vertical direction.

7. The display apparatus as claimed in claim 5 or 6, wherein the gain adjustment unit is arranged to reduce a rate of luminance increase by decreasing a gain of the detected specific pixel if the luminance of the first adjacent pixel is less than the luminance of the second adjacent pixel.

8. The display apparatus as claimed in claim 5 or 6, wherein the gain adjustment unit is arranged to reduce a rate of luminance decrease by decreasing a gain of the detected specific pixel if the luminance of the first adjacent pixel is greater than the luminance of the second adjacent pixel.

9. The display apparatus as claimed in one of claims 5 to 8, wherein the first critical value is greater than the second critical value.

10. The display apparatus as claimed in one of claims 5 to 9, wherein the first critical value is a minimum critical value regarding a degree of a steep variation of the luminance, and the second critical value is a maximum critical value regarding a degree of a gentle variation of the luminance.

11. An image processing method, comprising:
processing an input image to improve a transient (S320), and adjusting a gain of a luminance of a pixel (S340) of which a slope variation of the luminance exceeds a critical value, among pixels of the image having the improved transient; and
displaying the image (S350) processed by the image processing unit.

12. The image processing method as claimed in claim 11, wherein the processing adjusts the gain of the luminance of the pixel of which the slope variation of the luminance exceeds a critical value (S330), among pixels of the image having the improved transient to compensate a peak region which has become flat while the transient is improved.

13. The image processing method as claimed in claim 11 or 12, wherein the processing comprises:
processing the input image to improve the transient (S320);
detecting the pixel of which the slope variation of the luminance exceeds a critical value from the image having the improved transient (S330); and
adjusting the gain of the luminance of the pixel detected by the detection unit (S340).

14. The image processing method as claimed in claim 13, wherein the processing processes the input image to improve the transient by adjusting a gain of a luminance at an edge area of the image to increase a luminance slope.

15. The image processing method as claimed in claim 13, wherein the detecting detects a specific pixel of which a slope variation of a luminance exceeds a critical value from an image having the improved transient, by detecting the specific pixel in which an absolute value of a difference between a luminance of the specific pixel and a luminance of a first adjacent pixel is greater than a first critical value, and an absolute value of a difference between the luminance of the specific pixel and a luminance of a second adjacent pixel opposite the first adjacent pixel is less than a second critical value.
